# EUROPEAN PATENT APPLICATION

(11) **EP 1 647 386 A1**
(43) Date of publication of application: **19.04.2006**
(21) Application number: 04747657.7
(22) Date of filing: 16.07.2004
(51) Int. Cl.: B29C 45/17, B29C 45/50

(54) **MOLDING METHOD, PURGING METHOD, AND MOLDING MACHINE**

(30) Priority: 17.07.2003 JP 2003198158
(71) Applicant: SUMITOMO HEAVY INDUSTRIES, LTD., Shinagawa-ku, Tokyo 141-8686 (JP)
(72) Inventor: TERADA, Shinji, Sumitomo Heavy Industries, Ltd., Chiba-shi, Chiba 2630001 (JP); MARUMOTO, Hirotsugu, Sumitomo Heavy Industries, Chiba-shi, Chiba 2630001 (JP); TSUNEMI, Koki, Sumitomo Heavy Industries, Ltd., Chiba-shi, Chiba 2630001 (JP); KONNO, Masaaki, Sumitomo Heavy Industries, Ltd., CHiba 2630001 (JP)
(74) Representative: Wagner, Karl H.
(86) International application number: PCT/JP2004/010191
(87) International publication number: WO 2005/007382

(57) **Abstract**

The object of the present invention is to provide a molding method, a purging method, and a molding machine which can remove resin adhering to the rear surface of a flight of a screw with certainty. A molding material is supplied into a heating cylinder, a screw is rotated in one rotational direction, the pressing force of the molding material is applied to the front surface of the screw flight, the molding material is transported to the front of the screw while melting, the screw is rotated in the opposite rotational direction, the pressing force of the molding material is applied to the rear surface of the screw flight, and a reverse back pressure is applied to the screw.

## Description

### Technical Field

The present invention relates to a molding method, a purging method, and a molding machine.

### Background Art

Conventionally, in a molding machine such as an injection molding machine, molding of a molded article has been carried out by injecting at a high pressure a resin which had been heated and melted inside a heating cylinder to fill the inside of the cavity of a mold apparatus, and then cooling and solidifying the resin inside the cavity.

For this purpose, the above-described injection molding machine has a mold mechanism, a mold clamping mechanism, and an injection mechanism. The mold clamping mechanism has a stationary platen and movable platen. Closing, clamping, and opening of the mold mechanism are carried out by advancing or retracting the movable platen by means of a mold clamping cylinder.

The injection mechanism has a heating cylinder which heats and melts a resin, and an injection nozzle which is installed on the front end of the heating cylinder and which performs injection of the molten resin. A screw is disposed inside the heating cylinder so as to be able to freely rotate and so as to be able to freely advance and retract. A resin is injected from the injection nozzle by advancing the screw by means of a drive portion installed at its rear end, and metering of the resin is carried out by rotating the screw by the drive portion.

During metering, the molten resin is transported to the front end of the screw, but if metering is repeatedly carried out, there are cases in which resin which has deteriorated adheres to the screw. The cause of the adhesion is that the resin which has been melted is resin which readily adheres to metal members such as the screw. Other causes are that the shape of the screw is one which readily causes stagnation of resin, and in stagnating locations, resin stagnates and deteriorates. If metering is repeatedly carried out, due to the flow of molten resin, the deteriorated resin which adhered to the screw may peel off, but it could not be completely removed.

In addition, in the above-described injection molding machine, in order to carry out preparatory operations such as replacement the mold mechanism and increasing the temperature, it is sometimes necessary to interrupt the molding of a molded product. However, in the period during which molding is interrupted, resin in the heating cylinder is exposed to a high temperature over a long period, so it ends up deteriorating. Therefore, at the completion of the above-described preparatory operations, purging of the remaining resin is carried out prior to restarting molding of a molded article, and deteriorated resin which remains in the heating cylinder is discharged. Purging is also carried out when the molding of a molded article is completed in order to prevent deteriorated resin from remaining in the heating cylinder. Furthermore, when molding molded articles using the same mold mechanism but switching to a different resin, purging is carried out and resin remaining from before the replacement is discharged from the heating cylinder (see, for example, Japanese Patent Application Laid-Open (kokai) No. H2-26720).

### Disclosure of the Invention

### Problems to be Solved by the Invention

Conventionally, in order to remove deteriorated resin which adhered to a screw during molding, it was necessary either to remove the screw from the heating cylinder and clean it or to carry out purging using a purging resin for the purpose of cleaning. However, even if purging was carried out, it was not possible to completely remove deteriorated resin which adhered to the screw. In the above-described conventional purging method, it was difficult to completely remove resin adhering to the screw. Therefore, when a resin was replaced by a different resin and molding of a molded article was carried out, in order to completely remove the old resin, it was necessary to use a large amount of a purging resin, which is a resin for the purpose of cleaning. In this case, the cost of the large amount of the purging resin becomes high, and a long time is required for carrying out purging, so the throughput of the injection molding machine ends up decreasing. In addition, in order to carry out replacement of resin with certainty, it was necessary to perform disassembly and cleaning in which the screw was pulled out of the heating cylinder in order to remove the old resin, and this is troublesome and time consuming. This is because it is difficult to completely remove resin adhering to the rear surface of the flight of the screw.

In order to carry out purging with certainty, as described in above-mentioned Patent Application Laid-Open 1, a method of carrying out purging has been proposed in which the screw and the heating cylinder are made to undergo relative vibration in the axial direction by periodically rotating the screw forwards and backwards. However, this method also could not completely remove resin adhering to the rear surface of the flight of the screw with certainty.

The object of the present invention is to solve the above-described conventional problems and to provide a molding method, a purging method, and molding machine which can remove resin adhering to the rear surface of the flight of a screw with certainty by applying a reverse back pressure to the screw.

### Means for Solving the Problems

For this purpose, a molding method according to the present invention, includes supplying a molding material into a heating cylinder, rotating a screw in one rotational direction and applying the pressing force of the molding material to the front surface of a screw flight, transporting the molding material towards the front of the screw while melting the molding material, and rotating the screw in the opposite rotational direction, applying the pressing force of the molding material to the rear surface of the screw flight so as to apply a reverse back pressure to the screw.

In another molding method according to the present invention; the reverse back pressure is generated by the application of a force to the screw in a direction retracting the screw.

In yet another molding method according to the present invention, the speed of the screw in the axial direction is close to zero, while the screw is being rotated in the opposite rotational direction.

In yet another molding method according to the present invention, the screw is rotated in the opposite rotational direction when the screw is located in the heating cylinder in a range from a position at which filling of the molding material into a mold is completed or a forward limit position up to half a metering stroke.

In still another molding method according to the present invention, the screw is rotated in the opposite rotational direction every prescribed number of metering steps.

In yet another molding method of the present invention, the ratio of the length of time for which the screw is rotated in the opposite rotational direction to the length of time of the metering step is 1/10 to 1/1.5.

A purging method of the present invention includes supplying a molding material into a heating cylinder, rotating a screw in one rotational direction and applying the pressing force of the molding material to the front surface of a screw flight, transporting the molding material towards the front of the screw while melting the molding material, and rotating the screw in the opposite rotational direction, applying the pressing force of the molding material to the rear surface of the screw flight so as to apply a reverse back pressure to the screw.

In another purging method according to the present invention, the heating cylinder is retracted after the application of the reverse back pressure to the screw.

In yet another purging method according to the present invention, the speed of the screw in the axial direction is close to zero, while the screw is being rotated in the opposite rotational direction.

In yet another purging method according to the present invention, the screw is rotated in the opposite rotational direction when the screw is located in the heating cylinder in a range from the forward limit position up to half a metering stroke.

A molding machine according to the present invention includes a heating cylinder, a screw which is rotatably disposed inside the heating cylinder and which has a helical groove portion on its outer peripheral surface, a screw rotating mechanism for rotating the screw in one rotational direction and the opposite rotational direction, and a control apparatus which rotates the screw in the opposite rotational direction and applies a reverse back pressure to the screw against the pressing force of the molding material which is-applied to the rear surface of the screw flight of the screw.

Another molding machine according to the present invention includes a screw advancing and retracting drive mechanism which advances and retracts the screw in the axial direction, and the control apparatus controls the operation of the screw advancing and retracting drive mechanism so that a reverse back pressure is applied to the screw by the application of a force to the screw in a direction retracting the screw.

In yet another molding machine according to the present invention, the control apparatus makes the speed of the screw in the axial direction close to zero while rotating the screw in the opposite rotational direction.

In still another molding machine according to the present invention, the control apparatus rotates the screw in the opposite rotational direction every prescribed number of metering steps.

In yet another molding machine according to the present invention, the control apparatus retracts the heating cylinder and carries out purging operation.

### Effects of the Invention

According to the present invention, by rotating a screw in the reverse direction and applying a reverse back pressure to the screw by the pressure of resin in a heating cylinder, resin adhering to the rear surface of the flight of the screw can be removed with certainty.

### Brief Description of the Drawings

FIG. 1 is a view showing the operation of an injection mechanism when carrying out purging in an embodiment of the present invention;
FIG. 2 is a schematic view of an injection molding machine in an embodiment of the present invention;
FIG. 3 is a side view of a screw of an injection molding machine in an embodiment of the present invention;
FIG. 4 is a view showing the operation of a screw when carrying out purging in an embodiment of the present invention;
FIG. 5 is a view for illustrating the state of a resin when a reverse back pressure is applied to a screw in an embodiment of the present invention; and
FIG. 6 is a table showing the results of experiments applying a reverse back pressure to a screw in an embodiment of the present invention.

### Description of Reference Numerals

- 22: Heating cylinder
- 24: Screw
- 25: Screw advancing and retracting mechanism
- 28: Screw rotating mechanism
- 32: Stationary mold
- 35: Flight

### Best Mode for Carrying Out the Invention

Next, an embodiment of the present invention will be described in detail with reference to the drawings. A molding method, a purging method, and a molding machine according to the present invention can be applied to various types of molding machines such as extrusion molding machines and laminators, but in this embodiment, for ease of explanation, the case will be described in which it is applied to an injection molding machine.

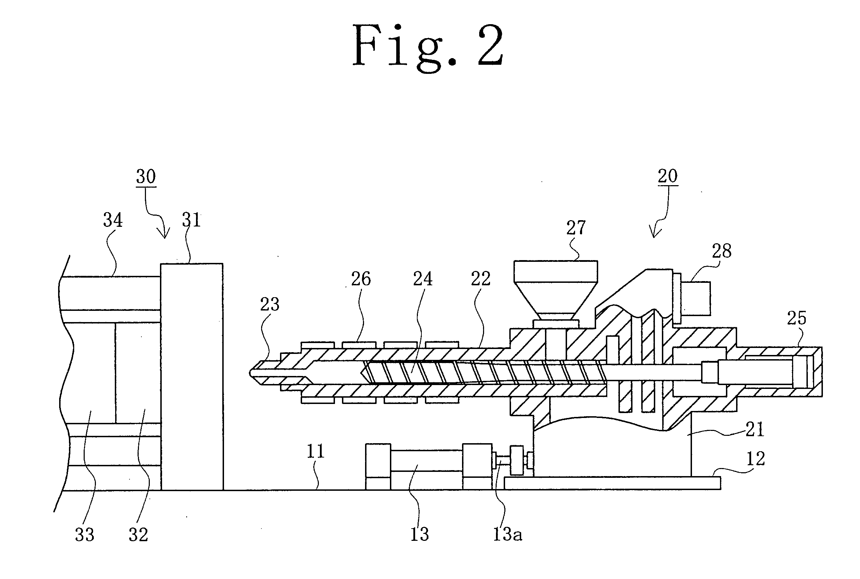

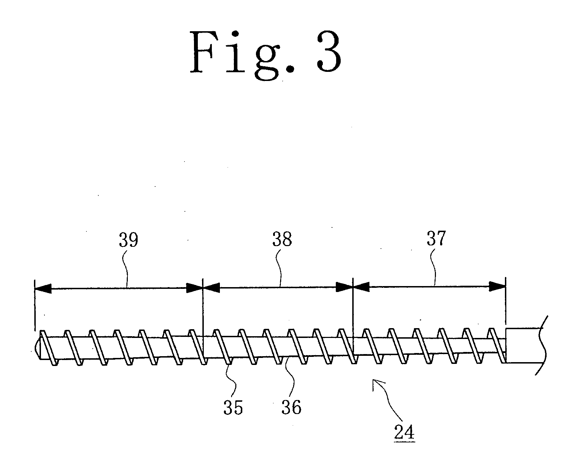

FIG. 2 is a schematic view of an injection molding machine in an embodiment of the present invention, and FIG. 3 is a side view of a screw of an injection molding machine in an embodiment of the present invention.

FIG. 2 shows a molding machine in the form of an injection molding machine. Reference numeral 20 denotes an injection mechanism, 30 denotes a mold clamping mechanism disposed opposite the injection mechanism 20, and 11 denotes a molding machine frame which supports the injection mechanism 20 and the mold clamping mechanism 30. Reference numeral 31 denotes a mold support member in the form of a stationary platen in the mold clamping mechanism 30, and the mold support member is secured to the molding machine frame 11. On the mold installation surface (the left hand surface in FIG. 2) of the stationary platen 31, a mold in the form of a stationary mold 32 which constitutes the mold mechanism is mounted. Reference numeral 33 denotes a movable mold which is mounted on an unillustrated movable platen. Here, a closed state of the molds is shown in which the parting surface of the stationary mold 32 and the parting surface of the movable mold 33 come into contact with each other. Reference numeral 34 denotes tie bars which connect an unillustrated toggle support and the stationary platen 31.

Reference numeral 21 denotes the body of the injection mechanism. It is mounted so as to be movable in the forward and backward direction (to the left and right in FIG. 2) along a guide member 12 which is secured to the molding machine frame 11. Reference numeral 13 denotes a body drive mechanism which moves the injection mechanism body 21 in the forward and backward direction and which is secured atop the molding machine frame 11. Here, the body drive mechanism 13 is, for example, an actuator using an electric motor such as a servomotor as a drive source and having an operating direction converting mechanism in the form of a ball screw mechanism, but the body drive mechanism 13 may be an actuator using a hydraulic cylinder mechanism, a pneumatic cylinder mechanism, or the like as a drive source. The injection mechanism body 21 is moved back and forth by moving, back and forth, the connecting rod 13a which has one end mounted on the injection mechanism body 21.

A heating cylinder 22 is secured to the injection mechanism body 21 so as to face in the forward direction (to the left in FIG. 2), and a nozzle in the form of an injection nozzle 23 is provided at the front end (at the left end in FIG. 2) of the heating cylinder 22. A plurality of heating mechanisms in the form of heaters 26 are installed on the outer peripheral surface of the heating cylinder 22 to control the temperature of the heating cylinder 22. A hopper 27 is installed on the heating cylinder 22, and a screw 24 is installed inside the heating cylinder 22 so as to be able to move in a forward and backward direction and so as to be able to rotate. The screw 24 is advanced and retracted, i.e., moved in the forward and backward direction, by a screw advancing and retracting drive mechanism in the form of screw advancing and retracting mechanism 25 installed to its rear (to the right in FIG. 2). At the same time, it is rotated in one rotational direction or the other rotational direction by a screw rotating mechanism in the form of screw rotating mechanism 28. The screw advancing and retracting mechanism 25 and the screw rotating mechanism 28 function as a screw drive mechanism for driving the screw 24. The screw advancing and retracting mechanism 25 may be an actuator which uses an electric motor such as a servomotor as a drive source and which has a motion converting mechanism in the form of a ball screw mechanism. However, an actuator using a hydraulic cylinder mechanism, a pneumatic cylinder mechanism, or the like as a drive source may also be used. The screw rotating mechanism 28 uses an electric motor such as a servomotor as a drive source, and transmits rotation to the rear portion of the screw 24 through an unillustrated gear, timing belt, chain, or the like.

As shown in FIG. 3, the screw 24 has in its periphery a continuous helical screw flight in the form of a flight 35 extending over the entire screw 24 and a channel 36 which is a groove between the surfaces of the flight 35. The screw 24 may be of any type, and may be, for example, a sub-flight screw having a barrier or a screw having a mixing section. In this embodiment, the case will be explained in which the screw 24 is a full flight screw, which is the most typical type. There may be two or more flights 35, and it may be a variable-lead type having a pitch which changes along its length. In the present embodiment, the case will be explained in which the flight 35 is a single flight having a constant pitch.

From the root towards the tip (the left end in FIG. 3) of the screw 24, the screw 24 is divided into three portions, i.e., a supply portion 37, a compression portion 38, and a metering portion 39. The supply portion 37 is a region which transports a pellet-shaped molding material in the form of a resin which is supplied from the hopper 27 while heating the resin. The compression portion 38 is a region which applies pressure to the resin, which has been preheated in the supply portion 37 and partially melted, to thereby compress the resin, and which supplies mechanical energy to promote melting. The metering portion 39 is a region which promotes the homogenization of the resin which has nearly completed melting in the compression portion 38 and regulates the flow. These three regions are not strictly demarcated, and rather are defined for convenience.

The outer diameter of the flight 35 is only slightly smaller than the inner diameter of the heating cylinder 22, so there is almost no gap between the outer peripheral surface of the flight 35 and the inner wall surface of the heating cylinder 22. Accordingly, when the screw 24 is rotated, a resin is transported towards the tip of the screw 24 by being pressed by the side wall of the front side (the left side in FIGS. 2 and 3) of the flight 35 within the helical channel 36 between the sides of the flight 35.

The solid phase resin which is charged into the heating cylinder 22 from the hopper 27 is transported to the compression portion 38 by the flight 35 while being kneaded and melted in the supply portion 37. In the compression portion 38, the resin is rapidly kneaded and melted and sent to the metering portion 39. In the metering portion 39, the resin is completely melted and is sent towards the tip of the screw 24. The resin which is sent towards the tip of the screw 24 accumulates within the heating cylinder 22 on the side near the tip of the screw 24 and its pressure increases, and due to this pressure, a retracting force acts on the screw 24, and the screw 24 is retracted. In addition, when the screw 24 is rotated in the metering direction, the pressure of resin acts on the front side of the flight 35. Due to this pressure, a retracting force acts on the screw 24, and a retracting action acts on the screw 24. In the screw advancing and retracting mechanism 25, a back pressure (an operating force acting in the direction to advance the screw 24) is applied against the retracting force on the screw 24.

Next, the operation of the injection mechanism 20 having the above-described structure will be described.

First, in a metering step, the screw rotating mechanism 28 is driven and rotates the screw 24, the screw advancing and retracting mechanism 25 is driven, and the screw 24 is retracted (moved to the right in FIG. 2) to a prescribed position. At this time, the resin supplied from the hopper 27 is heated inside the heating cylinder 22 and melted, and it accumulates at the front end of the screw 24 as the screw 24 retracts.

The resin may be a thermoplastic resin or a thermosetting resin. For example, the resin may be PVC (polyvinyl chloride), PS (polystyrene), expanded polystyrene, PP (polypropylene), PET (polyethylene terephthalate), PC (polycarbonate), PMMA (polymethyl methacrylate), HDPE (high density polyethylene), AS (styrene/acrylonitrile), an ABS resin, a methacrylate resin, a biodegradable resin, or any other type of resin. The resin may also be a high-heat-resistance resin, a super engineering plastic, a resin to which a flame retardant is added, a resin into which a filler such as glass fibers is mixed, a resin to which a chemical foaming agent is added, or the like.

Next, in the injection step, the body drive mechanism 13 is driven whereby the injection mechanism body 21 is advanced, and the injection nozzle 23 which is disposed at the front end of the heating cylinder 22 is pressed against the stationary mold 32. Then, the screw advancing and retracting mechanism 25 is driven whereby the screw 24 is advanced, so the resin accumulated at the front end of the screw 24 is injected from the injection nozzle 23, and the resin fills the interior of an unillustrated cavity formed between the stationary mold 32 and the movable mold 33.

Next, the mold clamping mechanism 30 will be described.

The mold clamping mechanism 30 has a stationary platen 31, an unillustrated toggle support, tie bars 34 which are supported between the stationary platen 31 and the toggle support, an unillustrated movable platen which is disposed opposite the stationary platen 31 and is installed so as to be able to freely advance and retract along the tie bars 34, and a toggle mechanism which is installed between the movable platen and the toggle support. The stationary mold 32 and the movable mold 33 are mounted opposite each other on the stationary platen 31 and the movable platen, respectively.

The toggle mechanism is a link mechanism comprising toggle levers which are swingably supported by a crosshead, toggle levers which are swingably supported by the toggle support, and toggle arms which are swingably supported by the movable platen. By advancing and retracting the crosshead between the toggle support and the movable platen by a servomotor, the movable platen is advanced and retracted along the tie bars 34, and the movable mold 33 is brought into contact with and separated from the stationary mold 32, whereby mold closing, mold clamping, and mold opening are carried out.

In this embodiment, the injection molding machine has an unillustrated control apparatus. The control apparatus is a computer which has a calculating means such as a CPU or an MPU, a storage means such as a magnetic disk or a semiconductor memory, an input means such as a keyboard, a mouse, a button, or a touch panel for inputting the rotational speed, the amount of rotation, and the like in the reverse direction, a display means such as a CRT, a liquid crystal display, or an LED (light emitting diode) display for indicating the rotational speed, the amount of rotation, and the like in the reverse direction, and a communications interface and the like. The control apparatus may be an independent member, or may be integrated with another control apparatus. The control apparatus controls the overall operation of the injection molding machine, and controls the operation of each mechanism such as the injection mechanism 20 and the mold clamping mechanism 30.

Next, the operation for carrying out purging in the injection molding machine constituted as described above will be described. In an injection molding machine, in order to carry out preparatory operations such as replacing the mold mechanism and increasing the temperature, there are cases in which molding of a molded article is interrupted, purging of remaining resin is carried out before recommencing molding of a molded article, and deteriorated resin remaining in the heating cylinder 22 is discharged. In addition, there are cases in which purging is carried out when the molding of a molded article is completed in order to prevent deteriorated resin from remaining inside the heating cylinder 22. Here, the case will be explained in which molding of a molded article is carried out using the same mold mechanism but the resin being used is replaced by a different one, and the resin remaining before replacement is entirely discharged from the heating cylinder 22.

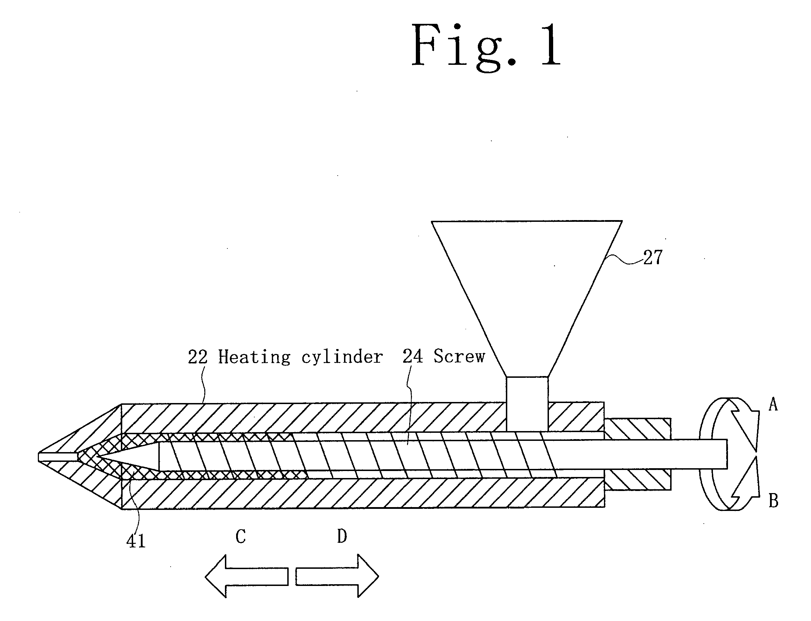

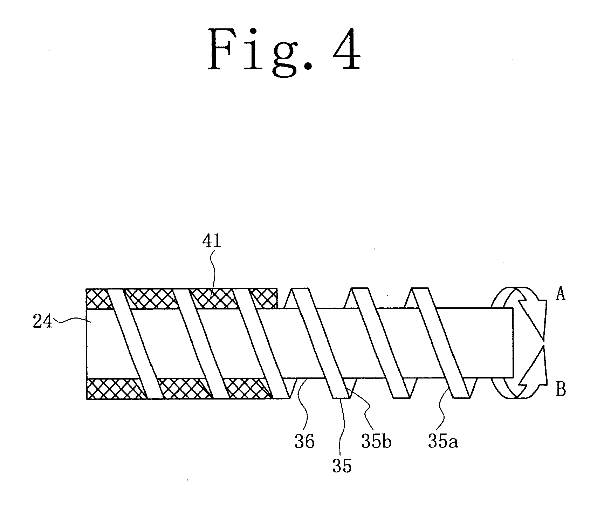

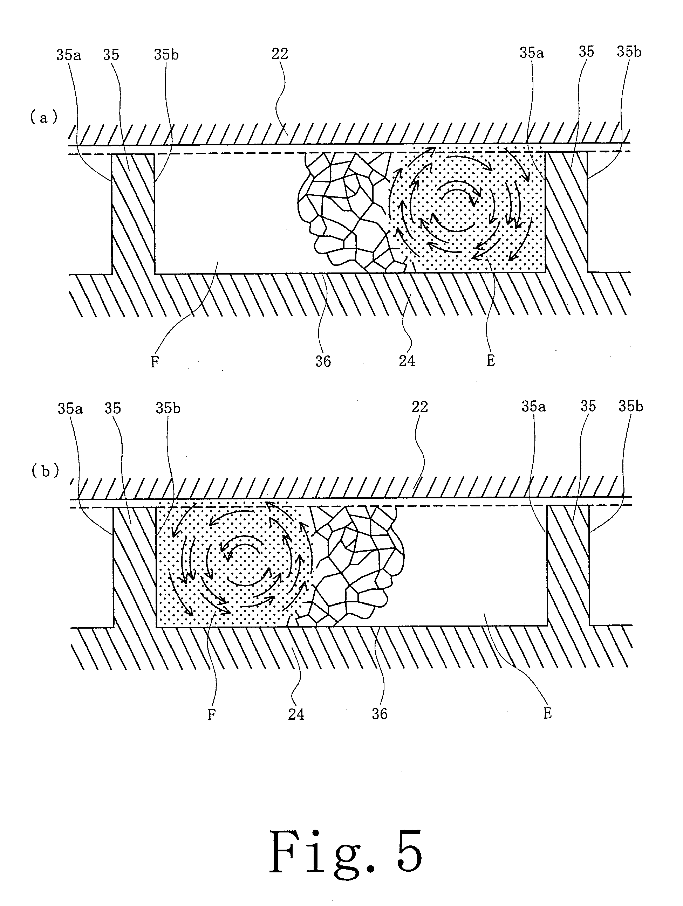

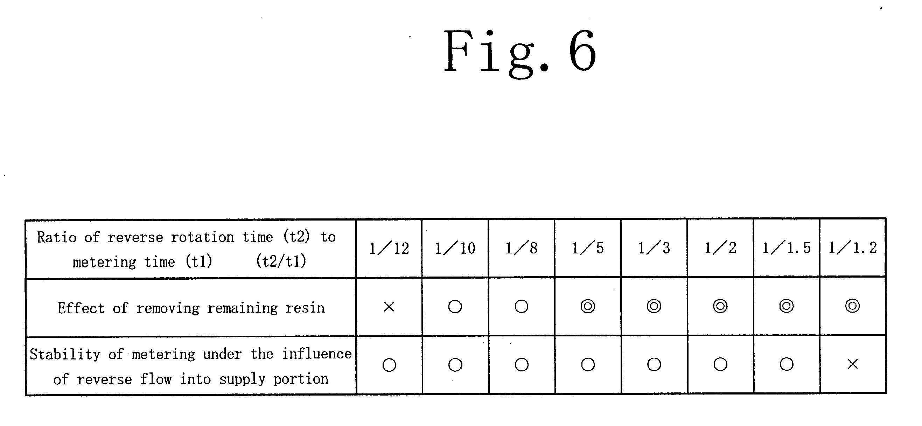

FIG. 1 is a view showing the operation of the injection mechanism carrying out purging in an embodiment of the present invention; FIG. 4 is a view showing the operation of a screw when carrying out purging in an embodiment of the present invention; FIG. 5 is a view for illustrating the state of a resin when a reverse back pressure is applied to a screw in an embodiment of the present invention; and FIG. 6 is a table showing the results of experiments applying a reverse back pressure to a screw in an embodiment of the present invention.

In order to perform molding of a molded article, first, a step of metering the resin is carried out, the screw rotating mechanism 28 is driven to rotate the screw 24, and the screw advancing and retracting mechanism 25 is driven to retract the screw 24 to a prescribed position. Then, resin in the form of resin pellets or the like is supplied from the hopper 27 into the heating cylinder 22. The resin which has been supplied from the hopper 27 is heated and melted in the heating cylinder 22, and as the screw 24 is retracted, it accumulates at the front of the screw 24. When a prescribed amount of resin has accumulated at the front of the screw 24, the body drive mechanism 13 is driven to advance the injection mechanism body 21, the injection nozzle 23 installed at the front end of the heating cylinder 22 is pressed against the rear surface of the stationary mold 32, whereby nozzle touching takes place. Then, an injection step takes place.

Subsequently, in the injection step, the screw advancing and retracting mechanism 25 is driven to advance the screw 24, so the resin which accumulated at the front of the screw 24 is injected through the injection nozzle 23, passes through an unillustrated sprue formed in the stationary mold 32, and then fills the interior of the unillustrated cavity formed between the stationary mold 32 and the movable mold 33.

Then, when the resin which fills the interior of the cavity is cooled and forms a molded article, a servomotor is driven to retract the crosshead, whereby the movable platen is retracted along the tie bars 34, so the movable mold 33 separates from the stationary mold 32 whereby mold opening takes place. When the molded article has been removed from the cavity, the servomotor is again driven to advance the crosshead, and the movable platen advances along the tie bars 34. As a result, the mold mechanism comprising the stationary mold 32 and the movable mold 33 returns to a closed state. Then, the injection step is again carried out. The above-described operation is then repeated, whereby a plurality of molded articles are molded. The operation of performing molding of a molded article in the injection molding machine may be carried out manually by an operator, or may be controlled by a control apparatus and carried out automatically.

Next, when a prescribed number of molded articles have been molded, molding is stopped, and purging of resin remaining inside the heating cylinder 22 is carried out. In this case, an operator operates the input means of the control apparatus, and, for example, by pressing a resin replacement button provided in the input means, resin replacement operation is commenced. When resin replacement operation commences, first, the body drive mechanism 13 is driven to retract the injection mechanism body 21, and as shown in FIG. 2, the injection nozzle 23 installed on the front end of the heating cylinder 22 is transported to the rear of the rear surface of the stationary platen 31.

The operator sets a purged resin receiving member, such as a dish or the like for housing the resin or the like which is purged, in a prescribed location. In addition, the operator preferably sets a splashing preventing member such as a splashing preventing plate in a position surrounding the purged resin receiving member and the injection nozzle 23. As a result, the injection molding machine and its periphery are not contaminated by the purged resin and the like. The purged resin receiving member and the splashing preventing member need not rely on the operation of an operator and may be automatically set in place.

Next, purging of the remaining resin is commenced. First, the screw rotating mechanism 28 is driven to rotate the screw 24 in the positive direction as a first rotational direction, as shown by arrow A in FIG. 1. Here, the positive direction is the direction in which the screw 24 is rotated during the above-described metering step. As a result, molten resin 41 is pressed by the front surface 35a of a flight 35 like that shown in FIG. 4 inside the helical channel 36 between the sides of the flight 35, whereby the resin is sent towards the tip of the screw 24. Then, the screw advancing and retracting mechanism 25 is driven to move the screw 24 in the forward direction, as shown by arrow C in FIG. 1. As a result, molten resin 41 remaining in the heating cylinder 22 is discharged from the injection nozzle 23. In this case, the screw 24 is moved to the forwardmost position in the range of movement in the forward and backward direction, i.e., to the forward limit position of the screw stroke.

Then, the screw rotating mechanism 28 is driven to rotate the screw 24 in the reverse direction as the other rotational direction, as shown by arrow B in FIG. 1. Here, the reverse direction is the opposite direction from the direction in which the screw 24 is rotated in the metering step. As a result, the molten resin 41 is pressed by the rear surface 35b of a flight 35 like that shown in FIG. 4 within the helical channel 36 between the sides of the flight 35, whereby the resin is moved in the opposite direction from the tip of the screw 24.

In this case, the screw advancing and retracting mechanism 25 is driven to fix the screw 24 at the forward limit position of the screw stroke with respect to the axial direction. Here, without the screw advancing and retracting mechanism 25 being driven, in a state in which the screw 24 can move forwards or backwards, i.e., in a state in which the screw 24 is free to move in the axial direction, if the screw 24 is rotated in the reverse direction, the rear surface 35b of the flight 35 receives the reaction force of the molten resin 41, so the screw 24 ends up being moved in the forwards direction. Therefore, the screw advancing and retracting mechanism 25 is driven to intentionally fix the screw 24 at the forward limit position of the screw stroke. Namely, a force is applied in the direction retracting the screw 24 against the force attempting to advance the screw 24, i.e., a reverse back pressure is applied.

The screw 24 need not be strictly secured with respect to the axial direction. The screw 24 may be in a state in which it undergoes almost no movement in the axial direction or in which it moves only at an extremely low speed. In other words, it is sufficient for the speed of movement of the screw 24 in the axial direction to be a value close to zero, i.e., close to a zero speed. The position in which the screw 24 is secured in the axial direction or the position in which the speed of movement in the axial direction is close to zero need not be exactly at the forward limit position of the screw stroke, and may be in the vicinity of the forward limit position. In addition, the above-described position may be a position in the axial direction of the screw'24 at the completion of filling the cavity formed between the stationary mold 32 and the movable mold 33 with the molten resin 41, i.e., the position at the completion of filling of the molding material into the molds.

As a result, the pressure of the molten resin 41 inside the heating cylinder 22 is applied to the rear surface 35b of the flight 35 of the screw 24. The molten resin 41 is strongly pressed by the rear surface 35b of the flight 35 and receives pressure. This can be described in greater detail as follows. At the time of rotation in the positive direction as shown by arrow A in FIG. 1, i.e., when the screw 24 is rotating in the metering step, as shown in FIG. 5(a), the molten resin 41 in the helical channel 36 between the sides of the flight 35 flows as shown by the arrows in portion E which is the portion close to the front surface 35a of the flight 35, so a resin pressure is generated in portion E. In contrast, in portion F which is a portion close to the rear surface 35b of the flight 35, the molten resin 41 is in a stagnated state so a resin pressure is not generated.

However, when the screw 24 is rotated in the reverse direction as shown by arrow B in FIG. 1, as shown in FIG. 5(b), the molten resin 41 in the helical channel 36 between the sides of the flight 35 is in a stagnated state in portion E, which is a portion close to the front surface 35a of the flight 35, so a resin pressure is not generated. In contrast, in portion F which is a portion close to the rear surface 35b of the flight 35, the molten resin 41 flows as shown by the arrows, so a resin pressure is generated in portion F. Therefore, pressure is applied to the resin adhered to the rear surface 35b of the flight 35 as well as to the molten resin 41, and the adhered resin is removed from the rear surface 35b. In this case, it is thought that the adhered resin is removed from the rear surface 35b by rubbing of the molten resin 41, to which pressure is applied, against the rear surface 35b of the flight 35 while being strongly pressed against the rear surface 35b of the flight 35.

After the screw rotating mechanism 28 rotates the screw 24 in the reverse direction by a prescribed number of rotations, it again rotates the screw 24 in the positive direction, and the screw advancing and retracting mechanism 25 moves the screw 24 in the backwards direction as shown by arrow D in FIG. 1. As a result, solid phase resin which remains in the range of the supply portion 37 of the screw 24 is sent by the flight 35 to the compression portion 38 and the metering portion 39 while being kneaded and melted, and then is melted. When a prescribed amount of the molten resin 41 is accumulated in front of the screw 24 as the screw 24 is retracted, the screw advancing and retracting mechanism 25 is again driven and moves the screw 24 in the forward direction, whereby the molten resin 41 is discharged from the injection nozzle 23.

Then, the screw 24 is again fixed at the forward limit position of the screw stroke with respect to the axial direction, and the screw 24 is rotated in the reverse direction. The above-described operation is then repeated until all of the remaining resin is discharged. After all of the remaining resin has been discharged from the heating cylinder 22, the resin after replacement, i.e., the new resin is supplied from the hopper 27 into the heating cylinder 22, and the metering step of the resin is carried out. As a result, the new resin is heated and melted in the heating cylinder 22, and accumulates at the front of the screw 24 as the screw 24 is retracted. When just a prescribed amount of the new resin has accumulated at the front of the screw 24, molding of a molded product using the new resin can be commenced.

If necessary, a purging resin, which is a resin for cleaning the heating cylinder 22, the screw 24, and the like, may also be used. In this case, after all of the remaining resin has been discharged from the heating cylinder 22, the purging resin is supplied from the hopper 27 to the interior of the heating cylinder 22, and the step of metering the resin is carried out. Purging is then carried out with the purging resin, and the inner surface of the heating cylinder 22 and the surface of the screw 24 are cleaned. In this case as well, an operation similar to the above-described purging of the remaining resin is repeated. Namely, the operation of moving the screw 24 in the forward direction, discharging the molten purging resin from the injection nozzle 23, securing the screw 24 in the forward limit position of the screw stroke, and rotating the screw 24 in the reverse direction is repeated. As a result, resin adhering to the rear surface 35b of the flight 35 can be removed with certainty. After discharge of the purging resin from the heating cylinder 22 has been completed, a new resin can be supplied from the hopper 27 into the heating cylinder 22, and as described above, molding of the molded product using the new resin can be commenced.

Alternatively, replacement of a resin may be performed in the following manner. In this case, when the previous molding is completed, first, the injection mechanism body 21 is retracted. Then, after the supply path of resin between the hopper 27 and the heating cylinder 22 is cut off, normal purging operation is carried out. Namely, the operation of rotating the screw 24 in the positive direction and the operation of moving the screw 24 in the forward direction and discharging remaining resin through the injection nozzle 23 are repeated a plurality of times, and the discharge of the resin used during the previous molding is completed. Subsequently, the new resin is supplied into the heating cylinder 22. Then, the operation of rotating the screw 24 in the positive direction, the operation of rotating the screw 24 in the reverse direction, and the operation of moving the screw 24 in the forward direction to discharge the resin through the injection nozzle 23 are carried out. As a result, the resin used for molding the previous time which adhered to the rear surface 35b of the flight 35 can be removed by the new resin. In this case, replacement of the resin can be carried out faster than the case in which the screw 24 is rotated in the reverse direction in a state in which the resin used in the previous molding is in the heating cylinder 22, and then the resin adhering to the rear surface 35b of the flight 35 is removed by the resin used for molding the previous time.

Alternatively, replacement of resin may also be carried out in the following manner. In this case, after the previous molding has been completed, first, the injection mechanism body 21 is retracted. Then, when the resin used during the previous molding has sufficiently accumulated within the heating cylinder 22, the new resin is supplied from the hopper 27 into the heating cylinder 22. In a state in which both of the resin used during the previous molding and the new resin are present in the heating cylinder 22, the operation of rotating the screw 24 in the positive direction, the operation of rotating the screw 24 in the reverse direction, and the operation of moving the screw 24 forwards to discharge the resin from the injection nozzle 23 are carried out.

The prescribed number of rotations that the screw 24 is rotated in the reverse direction can be properly set, but in order to completely remove resin adhering to the rear surface 35b of the flight 35, it is preferably at least 1 rotation. The maximum value of the prescribed number of rotations is preferably such that the molten resin 41 in the metering portion 39 does not enter the range of the supply portion 37 of the screw 24. At a point in time just before the screw 24 is rotated in the reverse direction, the molten resin 41 is present in the range of the metering portion 39. However, due to rotation of the screw 24 in the reverse direction, the molten resin 41 is sent in the direction opposite to the tip of the screw 24, and moved towards the compression portion 38 and the supply portion 37. The amount of molten resin 41 which is moved is nearly proportional to the number of rotations that the screw 24 is rotated in the reverse direction, so by properly setting the number of rotations, the molten resin 41 can be prevented from entering the range of the supply portion 37.

As mentioned above, during operations for molding, the resin is solid in the range of the supply portion 37 of the screw 24, so in the supply portion 37, resin does not remain on the surface of the screw 24 including the rear surface 35b of the flight 35. Rather, if molten resin 41 enters into the supply portion 37, even if the screw 24 is rotated in the positive direction to send resin forward, the resin cannot be sent sufficiently forward, and metering ends up being unstable. In contrast, in the range of the compression portion 38, during operations for molding, the resin is molten, so it is thought that resin adheres to the rear surface 35b of the flight 35 to a certain extent. Therefore, by rotating the screw 24 in the reverse direction, the molten resin 41 which entered into the compression portion 38 rubs the rear surface 35b while being strongly pressed by the rear surface 35b of the flight 35. Thus, the effect of removing adhered resin can be obtained.

A suitable value for the above-described prescribed number of rotations that the screw 24 is rotated in the reverse direction varies depending upon factors such as the type of resin, the type, dimensions, and operating conditions of equipments including the injection mechanism 20 and the screw 24, so it is difficult to define the suitable value in general, but in experiments which the inventors of the present invention carried out using an actual injection mechanism, the suitable value was approximately 5 rotations.

In those experiments, a full-flight screw with a screw diameter of 14 mm was used. The rotational speed of the screw was 100 rpm for both positive rotation and reverse rotation, the time for which the screw was rotated in the positive direction in the metering step was 12 seconds, and the temperature of the heating cylinder was 200°C. The resin before replacement was polystyrene (PS) to which a red master batch was added, and the resin was purged and replaced by colorless polystyrene (PS) as a new resin to be used after replacement. In this case, the operation of replacing the resin was carried out a plurality of times by fixing the screw in the forward limit position of the screw stroke and varying the time for which the screw was rotated in reverse. Each time the above-described operation was completed, the screw was pulled out of the heating cylinder, and the state of adhesion of the resin before replacement was visually ascertained.

As a result, it could be ascertained that when the time for which the screw was fixed in the forward limit position of the screw stroke and rotated in the reverse direction was around 3 seconds, namely, when the ratio of the length of time of rotation in reverse direction to the metering time was 1/4, and when the number of rotations of the screw in the reverse direction was around 5 rotations, there was no adhesion of the resin used prior to replacement. It could also be ascertained that when the length of time of rotation in the reverse direction was around 8 seconds, namely, if the ratio of the length of time of rotation in the reverse direction to the metering time was 1/1.5, and when the number of rotations of the screw in the reverse direction was around 10 rotations, molten resin entered into the supply portion of the screw.

The inventors of the present invention carried out additional experiments using an injection mechanism. In this experiment, a screw which had been subjected to hard chrome plating and had a diameter of 50 mm was employed. The rotational speed of the screw in reverse rotation was 50 rpm, the length of time of rotation of the screw in the positive direction during the metering step, namely, the metering time was 6 seconds, and the temperature of the heating cylinder was 240°C. A resin prior to replacement in the form of polypropylene (PP) to which a red master batch was added (mixing ratio; 10:1) was replaced by a new resin in the form of polypropylene (PP) to which a white master batch was added (mixing ratio; 10:1). A flat plate was molded from the resin injected from the injection nozzle, and the amount of resin required for the flat plate to change in color from red to white was measured. Measurement of the color was carried out through measurement of value "a" with a spectral color analyzer. The measured value was 50 mm. The length of time for which the screw was rotated in the reverse direction; i.e., the reverse rotation time, was 3 seconds, and the ratio of the reverse rotation time to the metering time was 1/2.

In the above-described additional experiment, it was confirmed that the amount of resin used could be reduced by 20% to 30% compared to a conventional method. More specifically, the results of the additional experiments are shown in FIG. 6. The table shown in FIG. 6 shows the results of evaluation when the ratio of the reverse rotation time to the metering time was varied, with respect to the effect of removing remaining resin and the stability of metering under the influence of reverse flow to the supply portion. In the table shown in FIG. 6, x indicates poor, circle indicates good, and double circle indicates extremely good results of evaluation.

As is apparent from FIG. 6, when the time for which the screw is rotated in the reverse direction is not sufficiently long, remaining resin cannot be'sufficiently removed. On the other hand, it can be seen that when the time for which the screw is rotated in the reverse direction is too long, molten resin ends up entering to the supply portion of the screw, and metering stability decreases. Specifically, it can be seen that when the ratio of the reverse rotation time to the metering time is at least 1/10, remaining resin can be adequately removed. In addition, it can be seen that when the ratio of the reverse rotation time to the metering time is at least 1/5, remaining resin can be removed extremely effectively. On the other hand, it can be seen that when the ratio of the reverse rotation time to the metering time reaches 1/1.2, molten resin enters the supply portion of the screw, adversely affecting on metering stability. From these results, it can be said that a sufficient effect can be obtained if the ratio of the reverse rotation time to the metering time is 1/10 to 1/1.5. In addition, it can be said that a better effect can be obtained if the ratio of the reverse rotation time to the metering time is 1/5 to 1/1.5.

A higher rotational speed for the screw is preferred, but the amount of molten resin which is moved depends upon the rotational speed of the screw, so if the screw is rotated in the reverse direction at a rotational speed higher than 100 rpm, there is the possibility of molten resin entering the supply portion of the screw. Therefore, if the screw is rotated in the reverse direction at a rotational speed of the screw in the range of 50 to 100 rpm, remaining resin can be removed in a short period of time while maintaining metering stability.

The operation of carrying out purging in an injection molding machine can be carried out by manual operation by an operator, and may also be carried out automatically under the control of a control apparatus.

In this manner, in this embodiment, when carrying out purging of resin remaining in the heating cylinder 22, the screw 24 is fixed at the forward limit position of the screw stroke with respect to the axial direction and is rotated in the reverse direction. As a result, the pressure of molten resin 41 in the heating cylinder 22 is applied to the rear surface 35b of the flight 35 of the screw 24. The molten resin 41 to which pressure is applied rubs against the rear surface 35b while strongly pressed against the rear surface 35b of the flight 35, whereby adhered resin is removed from the rear surface 35b. Therefore, resin adhering to the rear surface 35b of the flight 35, which was difficult to remove by conventional methods, can be removed, and resin adhering to the screw 24 can be removed with certainty. Accordingly, resin remaining in the heating cylinder 22 can be completely purged in a short length of time.

The molten resin 41 remaining in the heating cylinder 22 adheres to the inner surface of the heating cylinder 22 or to the screw 24, but by rotating the screw 24 in the positive direction in the metering step or by advancing the screw 24 in the injection step, some of the adhered resin is rubbed off by the molten resin 41 which flows, so it is removed relatively easily. This is thought to be because by rotating the screw 24 in the positive direction or advancing it, the molten resin 41 flows while being pressed by the inner surface of the heating cylinder 22, the bottom surfaces of the channel 36 in the screw 24, and the front surface 35a of the flight 35. However, even if the screw 24 is rotated in the positive direction and advanced, molten resin 41 is not pressed against the rear surface 35b of the flight 35. Therefore, in the past, resin adhering to the rear surface 35b of the flight 35 could not be removed. In contrast, in the present embodiment, by securing the screw 24 at the forward limit position of the screw stroke with respect to the axial direction and rotating it in the reverse direction, molten resin 41 to which pressure is applied rubs against the rear surface 35b of the flight 35 while being strongly pressed against the rear surface 35b, so resin adhering to the rear surface 35b can be removed.

By repeating, a plurality of times, the operation of rotating the screw 24 in the positive direction and the operation of rotating it in the reverse direction, resin adhering to the screw 24 can be removed with higher certainty. When rotating the screw 24 in the reverse direction, the position at which the screw 24 is fixed in the axial direction need not necessarily be the forward limit position of the screw stroke. As stated earlier, the fixed position may be in the vicinity of the forward limit position, or it may be a position at the completion of filling a molding material into the mold. In addition, it can be in a range up to one-half of the screw stroke, which is a range in which resin does not flow backwards into the supply portion 37 even if the screw 24 is rotated in the reverse direction. Namely, the screw 24 can be fixed after moving in the backwards direction and the screw 24 can be rotated in the reverse direction within a range from the position at which filling of a molding material into the mold is completed or the forward limit position up to half the metering stroke. In addition, as stated above, the screw 24 may not be secured strictly in the axial direction, and the screw 24 may be in a state in which it undergoes almost no movement in the axial direction; i.e., in which the speed of the screw 24 in the axial direction is almost zero.

In the present embodiment, as the above-described purging method, molten resin 41 is discharged from the injection nozzle 23 by advancing the screw 24, but the screw 24 may be fixed in a constant position, and molten resin 41 may be discharged from the injection nozzle 23 by rotating the screw 24 in the positive direction. In addition, an explanation was given of the case in which the resin is entirely discharged from the heating cylinder 22 when replacing resin and the like, but the present invention can also be applied to the case in which molding of a molded article is being carried out. Namely, resin adhering to the rear surface 35b of the flight 35 of the screw 24 can be removed from the rear surface 35b while molding of a molded article is carried out.

For example, when carrying out molding of a molded article, the screw 24 can be fixed, prior to carrying out the metering step, at the forward limit position of the screw stroke in the axial direction and rotated in the reverse direction. As a result, pressure is applied to the molten resin 41 in the heating cylinder 22, so resin adhering to the rear surface 35b of the flight 35 of the screw 24 is removed. The removed resin is mixed with the molten resin 41, so in the next injection step, it is injected from the injection nozzle 23 and removed from the heating cylinder 22. By carrying out the operation of rotating the screw 24 in the reverse direction in each molding shot, metering can be stabilized. Alternatively, rotation of the screw 24 in the reverse direction may be carried out one time every prescribed number of metering steps. In this case, the molding cycle can be shortened as compared with the case in which the operation of rotating the screw 24 in the reverse direction is performed in each molding shot. Alternatively, after the screw 24 has been moved in the backwards direction, the screw 24 may be fixed in the range from the limit of forward movement to one-half of the screw stroke, which is the range in which resin does not flow backwards into the supply portion 37 even if the screw 24 is rotated in the reverse direction, and then rotated in the reverse direction.

Resin adhering to the rear surface 35b of the flight 35 of the screw 24 is exposed to heat in the heating cylinder 22 over long periods of time; i.e., it has a long thermal history, so there is a good possibility of its deteriorating. If deteriorated resin for some reason peels off the rear surface 35b of the flight 35 and mixes into the molten resin 41, the quality of the molded product ends up decreasing. Therefore, when molding of a molded article is carried out, by periodically removing resin adhering to the rear surface 35b of the flight 35 in a manner described above, deteriorated resin can be prevented from mixing with molten resin 41 and decreasing the quality of a molded article.

The above-described prescribed number of rotations can be properly set. For example, prior to each metering step, the screw 24 may be fixed in the forward limit position of the screw stroke in the axial direction and rotated in the reverse direction. As a result, resin can be prevented from adhering to the rear surface 35b of the flight 35 over a long period of time.

The present invention is not limited to the above-described embodiment. Numerous modifications and variations of the present invention are possible in light of the spirit of the present invention, and they are not excluded from the scope of the present invention.

### Industrial applicability

The present invention can be applied to various types of molding machines such as extrusion molding machines and laminators.

## Claims

1. A molding method **characterized by**
(a) supplying a molding material into a heating cylinder,
(b) rotating a screw in one rotational direction and applying the pressing force of the molding material to the front surface of a screw flight,
(c) transporting the molding material towards the front of the screw while melting the molding material, and
(d) rotating the screw in the opposite rotational direction, applying the pressing force of the molding material to the rear surface of the screw flight so as to apply a reverse back pressure to the screw.

2. A molding method as set forth in claim 1, wherein the reverse back pressure is generated by the application of a force to the screw in a direction retracting the screw.

3. A molding method as set forth in claim 1 or 2, wherein the speed of the screw in the axial direction is close to zero, while the screw is being rotated in the opposite rotational direction.

4. A molding method as set forth in any one of claims 1 to 3, wherein the screw is rotated in the opposite rotational direction when the screw is located in the heating cylinder in a range from a position at which filling of the molding material into a mold is completed or a forward limit position up to half a metering stroke.

5. A molding method as set forth in claim 4, wherein the screw is rotated in the opposite rotational direction every prescribed number of metering steps.

6. A molding method as set forth in claim 5, wherein the ratio of the length of time for which the screw is rotated in the opposite rotational direction to the length of time of the metering step is 1/10 to 1/1.5.

7. A purging method **characterized by**
(a) supplying a molding material into a heating cylinder,
(b) rotating a screw in one rotational direction and applying the pressing force of the molding material to the front surface of a screw flight,
(c) transporting the molding material towards the front of the screw while melting the molding material, and
(d) rotating the screw in the opposite rotational direction, applying the pressing force of the molding material to the rear surface of the screw flight so as to apply a reverse back pressure to the screw.

8. A purging method as set forth in claim 7, wherein the heating cylinder is retracted after the application of the reverse back pressure to the screw.

9. A purging method as set forth in claim 7 or 8, wherein the speed of the screw in the axial direction is close to zero, while the screw is being rotated in the opposite rotational direction.

10. A purging method as set forth in any one of claims 7 to 9, wherein the screw is rotated in the opposite rotational direction when the screw is located in the heating cylinder in a range from the forward limit position up to halfway through a metering stroke.

11. A molding machine **characterized by** comprising
(a) a heating cylinder,
(b) a screw which is rotatably disposed inside the heating cylinder and which has a helical groove portion on its outer peripheral surface,
(c) a screw rotating mechanism which rotates the screw in one rotational direction and the opposite rotational direction, and
(d) a control apparatus which rotates the screw in the opposite rotational direction and applies a reverse back pressure to the screw against the pressing force of the molding material which is applied to the rear surface of the screw flight of the screw.

12. A molding machine as set forth in claim 11, wherein
(a) the molding machine includes a screw advancing and retracting drive mechanism which advances and retracts the screw in the axial direction, and
(b) the control apparatus controls the operation of the screw advancing and retracting drive mechanism so that a reverse back pressure is applied to the screw by the application of a force to the screw in a direction retracting the screw.

13. A molding machine as set forth in claim 11 or 12, wherein the control apparatus makes the speed of the screw in the axial direction close to zero while rotating the screw in the opposite rotational direction.

14. A molding machine as set forth in any one of claims 11 to 13, wherein the control apparatus rotates the screw in the opposite rotational direction every prescribed number of metering steps.

15. A molding machine as set forth in any one of claims 11 to 14, wherein the control apparatus retracts the heating cylinder and carries out purging operation.
